Europäisches Patentamt

European Patent Office

Office européen des brevets

(19)

(11) EP 1 300 971 A1

(12) EUROPEAN PATENT APPLICATION
published in accordance with Art. 158(3) EPC

(43) Date of publication:
09.04.2003 Bulletin 2003/15

(51) Int Cl.7: H04J 11/00

(21) Application number: 02769572.5

(22) Date of filing: 13.05.2002

(86) International application number:
PCT/JP02/04591

(87) International publication number:
WO 02/093805 (21.11.2002 Gazette 2002/47)

(84) Designated Contracting States:
AT BE CH CY DE DK ES FI FR GB GR IE IT LI LU
MC NL PT SE TR
Designated Extension States:
AL LT LV MK RO SI

(30) Priority: 14.05.2001 JP 2001143490

(71) Applicant: MATSUSHITA ELECTRIC INDUSTRIAL
CO., LTD.
Kadoma-shi, Osaka 571-8501 (JP)

(72) Inventors:
• SUMASU, Atsushi
Yokosuka-shi, Kanagawa 238-0013 (JP)
• HIRAMATSU, Katsuhiko
Yokosuka-shi, Kanagawa 238-0031 (JP)
• MIYOSHI, Kenichi
Kanazawa-ku, Yokohama-shi, Kanagawa 236-
(JP)

(74) Representative: Grünecker, Kinkeldey,
Stockmair & Schwanhäusser Anwaltssozietät
Maximilianstrasse 58
80538 München (DE)

(54) **MULTI-CARRIER COMMUNICATION METHOD AND MULTI-CARRIER COMMUNICATION APPARATUS**

(57) SFTD coding section 10 adjusts a sequence of frequency arrangement and phases of transmit data digital symbols in a time series and thus generates at least two transmit signals. The transmit signals are transformed into parallel signals in serial/parallel transform sections 11 and 12, and subsequently transformed into OFDM signals in IDFT sections 13 and 14 and parallel/ serial transform sections 15 and 16, respectively. In this way, by using the multicarrier transmission scheme, it is made possible to encode on the frequency axis signals conventionally encoded only on the time axis, and it is thus possible to decrease the processing delay while obtaining the same diversity effect as in the STTD transmit diversity scheme.

FIG.2

Printed by Jouve, 75001 PARIS (FR)

**Description**

Technical Field

The present invention relates to a multicarrier communication method and multicarrier communication apparatus.

Background Art

In general, mobile radio communication environments are greatly affected by multipath fading. In transmission at ultra broad frequency bands, the effect of frequency selective fading further increases, and becomes a factor for degrading the system performance.

As a method of preventing the degradation of performance by the fading, there is considered the use of diversity. Conventionally, the diversity primarily used is reception diversity whose processing is executed on a receiving side. Recently, transmit diversity has been used in which a transmitting side performs diversity transmission and it is thereby possible to obtain the diversity effect with simplified operation while reducing loads on mobile terminals.

One of conventional transmit diversity is STTD (Space Time coding based Transmit antenna Diversity) in which transmit signals are transmitted concurrently using a plurality of antennas and subjected to maximal-ratio combining so as to obtain diversity gain (for example, "Performance of OFDM-CDMA Systems with Transmit Diversity of Forward Link Transmission", Incheol JEONG and Masao NAKAGAWA, Technical Report of IEICE). STTD transmit diversity is such a scheme that alters transmit signals in time sequence to encode and transmits the signals from a plurality of antennas.

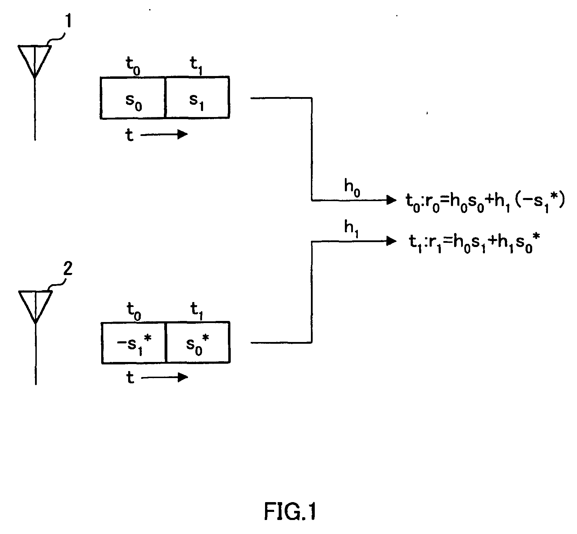

FIG.1 is a diagram to explain the transmit diversity in the conventional STTD scheme.

In this figure, from antenna 1 a signal $S_0$ is transmitted at time $t_0$ and a signal $S_1$ is transmitted at time $t_1$, while from antenna 2 a signal $-S_1{}^*$ is transmitted at time $t_0$ and a signal $S_0{}^*$ is transmitted at time $t_1$. These signals are added on a receiving side, and multiplied by transfer function $h_0$ or $h_1$, thereby obtaining a received signal $r_0$ at a timing of $t_0$ and a received signal $r_1$ at a timing of $t_1$. In other words, received signals $r_0$ and $r_1$ expressed by following equations (1) and (2) are obtained. In addition, "*" in the equations denotes complex conjugate.

$$t_0 : r_0 = h_0 S_0 - h_1 S_1{}^* \qquad (1)$$

$$t_1 : r_1 = h_0 S_1 + h_1 S_0{}^* \qquad (2)$$

Since signals $S_0$ and $S_1$ coexist in both equations (1) and (2), the signals $S_0$ and $S_1$ cannot be extracted. Therefore, adding the product of $r_0$ and $h_0{}^*$ and the product of $h_1$ and $r_1{}^*$ leads to equation (3) where a received signal $S_0 r$ is expressed using multiplications of $S_0$ by constants ($h_0{}^* h_0$ and $h_1 h_1{}^*$).

$$
\begin{aligned}
S_0 r \ &= \ h_0{}^* r_0 + h_1 r_1{}^* \\
&= \ h_0{}^* h_0 S_0 - h_0{}^* h_1 S_1{}^* + h_0{}^* h_1 S_1{}^* + h_1 h_1{}^* S_0 \\
&= \ h_0{}^* h_0 S_0 + h_1 h_1{}^* S_0 \qquad \ldots (3)
\end{aligned}
$$

Similarly, adding the product of $r_0{}^*$ and $-h_1$ and the product of $h_0{}^*$ and $r_1$ leads to equation (4) where a received signal $S_1 r$ is expressed using multiplications of $S_1$ by constants ($h_1 h_1{}^*$ and $h_0{}^* h_0$).

$$
\begin{aligned}
S_1 r \ &= \ -h_1 r_0{}^* + h_0{}^* r_1 \\
&= \ -h_1 h_0{}^* S_0{}^* + h_1 h_1{}^* S_1 + h_0{}^* h_0 S_1 + h_0{}^* h_1 S_0{}^* \\
&= \ h_1 h_1{}^* S_1 + h_0{}^* h_0 S_1 \qquad \ldots (4)
\end{aligned}
$$

Transfer functions $h_0$ and $h_1$ are measured in advance on a receiving side by channel estimation and determined, thereby obtaining a result of maximal-ratio combining. The signal combined by STTD transmit diversity is equivalent to a signal of the maximal-ratio combining performed on the receiving side. In addition, while the above example illustrates the case of using two signals, $S_0$ and $S_1$, cases of using two or more signals obtain the same result.

The STTD transmit diversity is as described above.

Thus, in the conventional STTD transmit diversity, channel bits composing transmit data are altered in time sequence or in phase. However, altering the time sequence or phase results in time delay.

Disclosure of Invention

It is an object of the present invention to provide a multicarrier communication method and multicarrier communication apparatus enabling decreased processing delay with the same effectiveness as in STTD transmit diversity.

The object is achieved by encoding transmit data at the frequency domain using the multicarrier transmission scheme.

Brief Description of Drawings

FIG.1 is a diagram to explain the transmit diversity in the conventional STTD scheme;

FIG.2 is a block diagram illustrating a configuration of a multicarrier transmission apparatus according to a first embodiment of the present invention;

FIG.3 is a diagram to explain the transmit diversity in the multicarrier transmission apparatus according to the first embodiment of the present invention; and

FIG.4 is a block diagram illustrating a configuration of a multicarrier reception apparatus according to a second embodiment of the present invention.

Best Mode for Carrying Out the Invention

Preferred embodiments of the present invention will be described below specifically with reference to accompanying drawings.

(First embodiment)

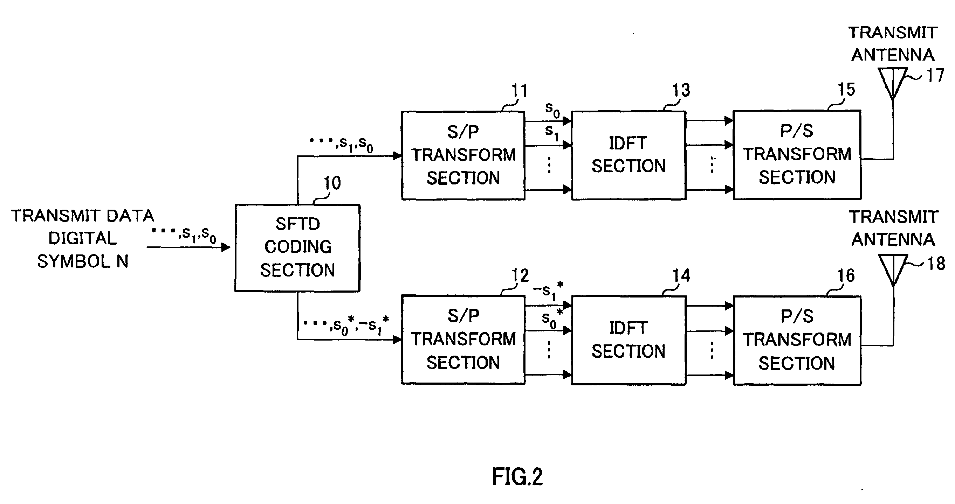

FIG.2 is a block diagram illustrating a configuration of a multicarrier transmission apparatus according to the first embodiment of the present invention.

In this figure, the multicarrier transmission apparatus of this embodiment has SFTD (Space Frequency coding based Transmit antenna Diversity) coding section 10, serial/parallel (S/P) transform section 11, serial/parallel (S/P) transform section 12, IDFT (Inverse Discrete Fourier Transform) section 13, IDFT (Inverse Discrete Fourier Transform) section 14, parallel/serial (P/S) transform section 15, parallel/serial (P/S) transform section 16, transmit antenna 17 and transmit antenna 18.

SFTD coding section 10 adjusts (SFTD coding) the sequence of frequency arrangement and phase of transmit data digital symbols $S_0$, $S_1$, ... input in a time series to output to sections for two antennas. At this point, the section 10 outputs transmit data digital symbols $S_0$, $S_1$, ...that are not adjusted and transmit data digital symbols $-S_1^*$, $S_{0^*}$, ... that are adjusted. The non-adjusted transmit data digital symbols $S_0$, $S_1$, ... are subjected to parallel transform in serial/parallel transform section 11 to be input to IDFT section 13. IDFT section 13 performs frequency transform on the input parallel transmit data digital symbols $S_0$, $S_1$, ... to output. Parallel/serial transform section 15 performs serial transform on signals from IDFT section 13 and thus outputs OFDM (Orthogonal Frequency Division Multiplexing) signals to transmit antenna 17.

Meanwhile, the adjusted transmit data digital symbols $-S_1^*$, $S_0^*$ ... are subjected to parallel transform in serial/parallel transform section 12 to be input to IDFT section 14. IDFT section 14 performs frequency transform on the input parallel transmit data digital symbols $-S_1^*$, $S_0^*$, ... to output. Parallel/serial transform section 16 performs serial transform on signals from IDFT section 14 and thus outputs OFDM (Orthogonal Frequency Division Multiplexing) signals to transmit antenna 18.

In this way, SFTD coding section 10 adjusts the sequence of frequency arrangement and phase of transmit data digital symbols $S_0$, $S_1$, ... input in a time series to provide to sections for two antennas. Serial/parallel transform sections 11 and 12 perform parallel transform on the provided transmit signals, IDFT sections 13 and 14 and parallel/serial transform sections 15 and 16 generate OFDM signals, and the signals are transmitted from transmit antennas 17 and 18.

In the present invention, since signals are concurrently transmitted at a plurality of frequency bands using the multicarrier scheme, it is possible to remarkably decrease the processing delay as compared to the conventional processing for interchanging the sequence of frequency arrangement and phases of transmit signal components on the time axis. Also in the SFTD transmit diversity using the multicarrier scheme, it is possible to extract received signals subjected to maximal-ratio combining as in the STTD transmit diversity.

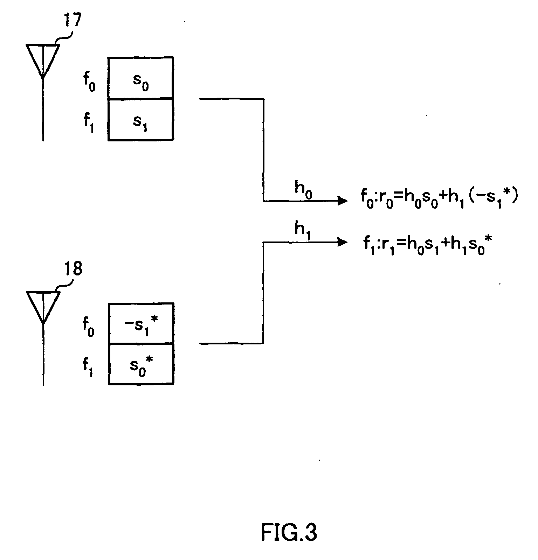

FIG.3 is a diagram to explain the transmit diversity in the SFTD scheme in this embodiment.

As illustrated in this figure, from transmit antenna 17 a signal $S_0$ is transmitted at frequency $F_0$ and a signal $S_1$ is transmitted at frequency $F_1$, while from transmit antenna 18 a signal $-S_1{}^*$ is transmitted at frequency $F_0$ and a signal $S_0{}^*$ is transmitted at frequency $F_1$. These signals are added on a receiving side, and multiplied by transfer function $H_0$ or $H_1$, thereby obtaining a received signal $R_0$ at a timing of $F_0$ and a received signal $R_1$ at a timing of frequency $F_1$. In other words, received signals $r_0$ and $r_1$ expressed by following equations (5) and (6) are obtained. In addition, "*" in the equations denotes complex conjugate.

$$f_0 : r_0 = h_0 S_0 + h_1(-S_1{}^*) \tag{5}$$

$$f_1 : r_1 = h_0 S_1 + h_1 S_0{}^* \tag{6}$$

Since signals $S_0$ and $S_1$ coexist in both equations (5) and (6), the signals $S_0$ and $S_1$ cannot be extracted. Therefore, adding the product of $r_0$ and $h_0{}^*$ and the product of $h_1$ and $r_1{}^*$ leads to equation (7) where a received signal $S_0 r$ is expressed using multiplications of $S_0$ by constants ($h_0{}^* h_0$ and $h_1 h_1{}^*$).

$$
\begin{aligned}
S_0 r &= h_0{}^* r_0 + h_1 r_1{}^* \\
&= h_0{}^* h_0 S_0 - h_0{}^* h_1 S_1{}^* + h_0{}^* h_1 S_1{}^* + h_1 h_1{}^* S_0 \\
&= h_0{}^* h_0 S_0 + h_1 h_1{}^* S_0 \qquad \cdots (7)
\end{aligned}
$$

Similarly, adding the product of $r_0{}^*$ and $-h_1$ and the product of $h_0{}^*$ and $r_1$ leads to equation (8) where a received signal $S_1 r$ is expressed using multiplications of $S_1$ by constants ($h_1 h_1{}^*$ and $h_0{}^* h_0$).

$$
\begin{aligned}
S_1 r &= -h_1 r_0{}^* + h_0{}^* r_1 \\
&= -h_1 h_0{}^* S_0{}^* + h_1 h_1{}^* S_1 + h_0{}^* h_0 S_1 + h_0{}^* h_1 S_0{}^* \\
&= h_1 h_1{}^* S_1 + h_0{}^* h_0 S_1 \qquad \cdots (8)
\end{aligned}
$$

Transfer functions $h_0$ and $h_1$ are measured in advance on a receiving side by channel estimation and determined, thereby obtaining a result of maximal-ratio combining. The signal combined by SFTD transmit diversity is equivalent to a signal of the maximal-ratio combining performed on the receiving side. In addition, while the above example illustrates the case of using two signals, $S_0$ and $S_1$, cases of using two or more signals obtain the same result.

Thus, according to the multicarrier transmission apparatus of this embodiment, since signals are concurrently transmitted at a plurality of frequency bands using the multicarrier transmission scheme, it is possible to remarkably decrease the processing delay as compared to the conventional processing for interchanging the sequence of frequency arrangement and phases of transmit signal components on the time axis like in the conventional STTD transmit diversity. Accordingly, it is possible to provide a multicarrier communication apparatus and multicarrier communication method enabling decreased processing delay while obtaining the effect of STTD transmit diversity.

In addition, while in this embodiment OFDM is used as a multicarrier transmission scheme, the present invention is not limited to such a scheme, and may use other methods (for example, such a method that implements the multicarrier transmission using limited bands obtained by performing carrier frequency modulation for each subcarrier).

Further, according to this embodiment, as illustrated in FIG.2, transmit data digital symbols $S_0$, $S_1$, ... input

time in a time series are subjected to adjustments in frequency arrangement and phase; the adjustments in frequency arrangement and phase are not limited particularly. In other words, interchanged matters may be determined in advance between transmitting and receiving sides, or a transmitting side may add information on interchanging of the sequence of frequency arrangement and phase to pilot signals or the like, while a receiving side extracts transmit signal components based on the information.

(Second embodiment)

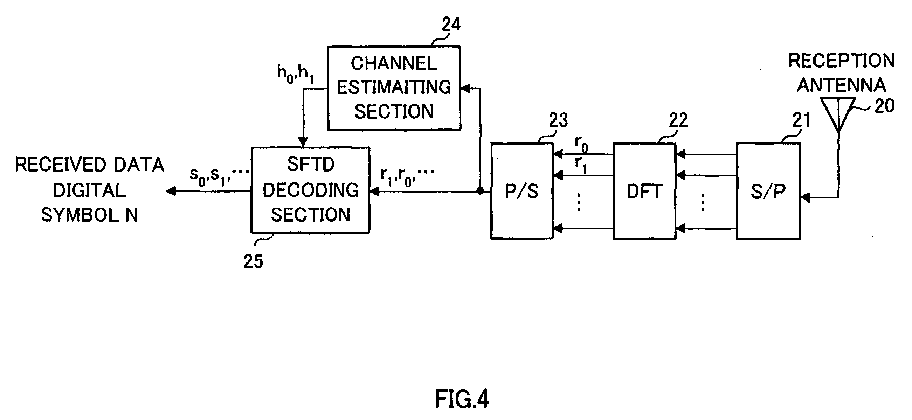

FIG.4 is a block diagram illustrating a configuration of a multicarrier reception apparatus according to the second embodiment of the present invention.

In this figure, the multicarrier reception apparatus of this embodiment has reception antenna 20, serial/parallel (S/P) transform section 21, DFT (Discrete Fourier Transform) section 22, parallel/serial (P/S) transform section 23, channel estimating section 24 and SFTD decoding section 25.

Serial/parallel transform section 21 performs parallel transform on OFDM signals received at reception antenna 20 and thus extracts a signal of each frequency component. DFT section 22 performs OFDM demodulation onsignalsextractedinserial/paralleltransformsection 21 to obtain received signals $r_0$, $r_1$, ... for each frequency component.. Parallel/serial transform section. 23 performs serial transform on received signals $r_0$, $r_1$, ... for each frequency component obtained in DFT section 22 to output. Channel estimating section 24 estimates the channel condition using pilot signals, etc. in received signals, and outputs channel estimation values $h_0$ and $h_1$ that are results of channel estimation. SFTD decoding section 25 performs SFTD decoding using the received signals and channel estimation values $h_0$ and $h_1$, and thereby obtains original transmit digital symbols S0, S1, ...

In this way, according to the multicarrier reception apparatus of this embodiment, it is possible to demodulate OFDM signals transmitted from the multicarrier transmission apparatus of this embodiment as described above and to obtain original transmit digital symbols $S_0$, $S_1$, ... Accordingly, by combining the multicarrier reception apparatus with the multicarrier transmission apparatus of the first embodiment, it is possible to achieve a multicarrier communication apparatus enabling decreased processing delay while obtaining the effect of STTD transmit diversity.

In addition, while in this embodiment OFDM is used as a multicarrier transmission scheme, the present invention is not limited to such a scheme, and may use other methods (for example, such a method that implements the multicarrier transmission using limited bands obtained by performing carrier frequency modulation for each subcarrier).

As described above, according to the present invention, it is possible to provide a multicarrier communication apparatus and multicarrier communication method enabling decreased processing delay while obtaining the effect of STTD transmit diversity.

This application is based on the Japanese Patent Application No.2001-143490 filed on May 14, 2001, entire content of which is expressly incorporated by reference herein.

The present invention is suitable for use in terrestrialdigitalbroadcastapparatusesand fast wireless LAN.

**Claims**

1. A multicarrier communication method comprising:

   on a transmitting side,
   adjusting a sequence of frequency arrangement and phases of transmit signal components in a time series to generate transmit signals; and
   transmitting the signals using at least two antennas,
   on a receiving side,
   receiving radio signals transmitted from the transmitting side using a single antenna; and
   combining a plurality of frequency components of received radio signals to extract the transmit signal components.

2. A multicarrier transmission apparatus comprising:

   at least two transmit antennas;
   a signal generating section that adjusts a sequence of frequency arrangement and phases of transmit signal components in a time series and thus generates at least two transmit signals; and
   a transmitting section that transmits the at least two transmit signals generated in the signal generating section from the transmit antennas, respectively.

**3.** The multicarrier transmission apparatus according to claim 2, wherein the transmitting section transforms each of the at least two transmit signals generated in the signal generating section into an orthogonal frequency division multiplexing signal to transmit from respective one of the transmit antennas.

**4.** A multicarrier reception apparatus comprising:

a single reception antenna; and

a transmit signal component acquiring section that combines a plurality of frequency components of received signals received at the reception antenna to extract transmit signal components.

**5.** The multicarrier reception apparatus according to claim 4, wherein the transmit signal component acquiring section performs orthogonal frequency division multiplexing demodulation on the received signals, and extracts the transmit signal components based on demodulated signals and channel estimation values estimated using the demodulated signals.

**6.** Amulticarrier communication apparatus comprising :

the multicarrier transmission apparatus according to claim 2; and
the multicarrier reception apparatus according to claim 4.

**7.** A multicarrier communication apparatus comprising:

the multicarrier transmission apparatus according to claim 3; and
the multicarrier reception apparatus according to claim 5.

$t_0 : r_0 = h_0 s_0 + h_1 (-s_1{}^*)$

$t_1 : r_1 = h_0 s_1 + h_1 s_0{}^*$

FIG.1

FIG.2

17

$f_0$ | $s_0$
$f_1$ | $s_1$

$h_0$

$f_0{:}r_0 = h_0 s_0 + h_1(-s_1{}^*)$

$h_1$

$f_1{:}r_1 = h_0 s_1 + h_1 s_0{}^*$

18

$f_0$ | $-s_1{}^*$
$f_1$ | $s_0{}^*$

FIG.3

EP 1 300 971 A1

FIG.4

## INTERNATIONAL SEARCH REPORT

| | |
|---|---|
| | International application No.<br>PCT/JP02/04591 |

**A. CLASSIFICATION OF SUBJECT MATTER**
Int.Cl⁷ H04J11/00

According to International Patent Classification (IPC) or to both national classification and IPC

**B. FIELDS SEARCHED**

Minimum documentation searched (classification system followed by classification symbols)
Int.Cl⁷ H04J11/00

Documentation searched other than minimum documentation to the extent that such documents are included in the fields searched
Jitsuyo Shinan Koho          1926–2000
Kokai Jitsuyo Shinan Koho    1971–2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Jintetsu TEI, Masao NAKAGAWA, "Kudari Link ni Okeru Soshin Diversity o Mochiita OFDM-CDMA no System Tokusei", The Institute of Electronics, Information and Communication Engineers Gijutsu Kekyu Hokoku, The Institute of Electronics, Information and Communication Engineers, Vol.100, No.561, 18 January, 2001 (18.01.01), pages 69 to 75 | 1-7 |
| Y | JP 11-266224 A (Nippon Telegraph And Telephone Corp.), 28 September, 1999 (28.09.99), Fig. 1 (Family: none) | 1-7 |
| A | JP 6-334573 A (Hitachi, Ltd.), 02 December, 1994 (02.12.94), Fig. 2 (Family: none) | 1-7 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 July, 2002 (09.07.02) | 23 July, 2002 (23.07.02) |

| Name and mailing address of the ISA/<br>Japanese Patent Office | Authorized officer |
|---|---|
| Facsimile No. | Telephone No. |

Form PCT/ISA/210 (second sheet) (July 1998)